# EUROPÄISCHE PATENTSCHRIFT

(11) **EP 3 746 335 B1**
(45) Veröffentlichungstag und Bekanntmachung des Hinweises auf die Patenterteilung: **10.05.2023**
(21) Anmeldenummer: 19703263.4
(22) Anmeldetag: 29.01.2019
(51) Int. Cl.: B60R 21/00, B62D 1/183, B62D 5/00

(54) **VERFAHREN ZUM INSASSENSCHUTZ EINES KRAFTFAHRZEUGES MIT EINEM STEER-BY-WIRE-LENKSYSTEM**
METHOD FOR OCCUPANT PROTECTION OF A MOTOR VEHICLE COMPRISING A STEER-BY-WIRE STEERING SYSTEM
PROCÉDÉ DE PROTECTION DES OCCUPANTS D'UN VÉHICULE AUTOMOBILE ÉQUIPÉ D'UN SYSTÈME DE DIRECTION STEER-BY-WIRE

(30) Priorität: 31.01.2018 DE 102018102103
(43) Veröffentlichungstag der Anmeldung: 09.12.2020
(73) Patentinhaber: thyssenkrupp Presta AG, 9492 Eschen (LI); thyssenkrupp AG, 45143 Essen (DE)
(72) Erfinder: HORVATH, Gergely, 6085 Fülöpszállás (HU)
(74) Vertreter: thyssenkrupp Intellectual Property GmbH
(86) Internationale Anmeldenummer: PCT/EP2019/052047
(87) Internationale Veröffentlichungsnummer: WO 2019/149671

(56) Entgegenhaltungen:
- EP-A1- 2 923 918
- WO-A1-2005/085012
- DE-A1- 4 105 821
- DE-A1-102016 125 839
- DE-B3-102014 006 550
- US-A1- 2014 028 008
- US-B1- 6 227 571

## Beschreibung

Die vorliegende Erfindung betrifft ein Verfahren zum Betreiben einer Insassenschutzvorrichtung eines Steer-by-Wire-Lenksystems mit den Merkmalen des Oberbegriffs des Anspruchs 1 und ein Steer-by-Wire-Lenksystem für Kraftfahrzeuge mit den Merkmalen des Oberbegriffs des Anspruchs 9.

Bei Steer-by-Wire-Lenksystemen ist die Stellung der gelenkten Räder nicht direkt mit dem Lenkrad gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsches wird über einen Lenksteller die Stellung der gelenkten Räder geregelt. Eine mechanische Verbindung zu den Rädern ist nicht vorgesehen. Um bei Steer-by-Wire-Lenkungen die Rückwirkungen der Straße auf das Lenkrad zu simulieren, ist es notwendig, am Lenkrad bzw. der Lenksäule einen Feedback-Aktuator (FBA) vorzusehen, welcher in Abhängigkeit von den Rückwirkungen der Lenkhandhabe ein Lenkgefühl aufprägt.

Steer-by-Wire-Lenksysteme weisen eine Vielzahl an Fahrerassistenzsystemen auf, die einen autonomen oder semi-autonomen Fahrmodus des Kraftfahrzeugs ermöglichen können. In einem autonomen Fahrmodus kann das Kraftfahrzeug mit Hilfe verschiedener Sensoren des Fahrerassistenzsystems die Umgebung des Kraftfahrzeugs erfassen und das Kraftfahrzeug durch Vorgabe vorbestimmter Werte vollkommen automatisch steuern. In einem semi-autonomen Fahrmodus hingegen lenkt das Fahrerassistenzsystem durch Vorgabe eines vorbestimmten Lenkeinschlagwinkels automatisch. Dies ist beispielsweise bei einem semi-autonomen Einparkvorgang der Fall. Hierbei übernimmt das Fahrerassistenzsystem die Lenkung des Kraftfahrzeugs und der Fahrer betätigt das Gaspedal und die Bremse. In einem manuellen Fahrmodus hingegen übernimmt der Fahrer die Steuerung des Kraftfahrzeugs.

Bei einem Fahrzeugfrontalaufprall existieren je nach Fahrmodus unterschiedliche Bedingungen, die zum Schutz des Fahrers im Idealfall beachtet werden sollten.

Aus der Offenlegungsschrift DE 10 2012 014 762 A1 ist eine Insassenschutzanordnung bekannt, bei der das Lenkrad zwischen einer ersten und zweiten Position im Fall eines Fahrzeugfrontalaufpralls verlagerbar ist, bevor der Fahrer auf den Airbag auftrifft. Dabei wird das Lenkrad im Fall des Fahrzeugfrontalaufpralls auf den Fahrer zu bewegt. Diese Bewegung ist nachteilig, da die Zeit zwischen dem Fahrzeugfrontalaufprall und dem Aufprall des Fahrers auf das Lenkrad reduziert ist, wodurch die Verletzungsgefahr gesteigert wird.

Auch aus der US 6,227,571 B1 ist es bekannt, eine Lenksäule für den Insassenschutz im Falle eines Unfalls zu verstellen. Für ein autonomes Fahrzeug offenbart die DE 10 2016 125 839 A1 die Lenkspindel mit einer erhöhten Verstellgeschwindigkeit in eine vorgegebene Position zu verbringen, wenn ein möglicher Aufprall erfasst wird.

Zudem ist aus der US 2014/0028008 A1 ein Kraftfahrzeug mit einem Steer-by-Wire-Lenksystem bekannt, eine Lenksäule bei einer unfallbedingten Kraftbeaufschlagung von einer Verstauposition in eine aktive Lenkposition zum Fahrer hin zu verbringen. Die Verstauposition wird dabei unter anderem in einem autonomen Fahrmodus eingenommen. Die aktive Lenkposition wird insbesondere eingenommen, wenn ein Fahrer das Fahrzeug manuell lenkt.

Es ist eine Aufgabe der vorliegenden Erfindung, ein Verfahren zum Betreiben einer Insassenschutzeinrichtung anzugeben, welches die Verletzungsgefahr des Fahrers reduziert.

Diese Aufgabe wird von einem Verfahren zum Betreiben einer Insassenschutzeinrichtung eines Steer-by-Wire Lenksystems mit den Merkmalen des Anspruchs 1 und einem Steer-by-Wire Lenksystem mit den Merkmalen des Anspruchs 9 gelöst. In den Unteransprüchen sind vorteilhafte Weiterbildungen der Erfindung genannt.

Im Folgenden wird eine Situation, in der der Fahrer das Lenkrad ergriffen hat, als Hands-On-Situation, und eine Situation, in der der Fahrer das Lenkrad nicht ergriffen hat, also eine Freihandfahrt, als Hands-Off-Situation bezeichnet, was den in diesen technischen Bereichen verwendeten Begriffen entspricht.

Es ist ein Verfahren zum Betreiben einer Insassenschutzeinrichtung eines Steer-by-Wire Lenksystems vorgesehen, wobei das Steer-by-Wire Lenksystem ein Lenkrad und eine mit dem Lenkrad verbundene verstellbare Lenksäule umfasst, die mittels eines Verstellmechanismus zwischen einer eingefahrenen Stellung und einer ausgefahrenen Stellung verstellbar ist, und wobei das Steer-by-Wire Lenksystem einen Feedback-Aktuator aufweist, der über das Lenkrad von einem Fahrer mit einem Fahrerwunsch für einen Lenkwinkel beaufschlagt werden kann und ein Feedback-Signal an das Lenkrad als Reaktion auf den Fahrerwunsch und einen Fahrzustand des Kraftfahrzeugs ausgibt. Das Verfahren umfasst folgende Schritte: Detektieren eines Unfalls; Detektieren einer Hands-off-Situation oder einer Hands-on-Situation; Falls eine Hands-off-Situation erkannt wurde, Verfahren der Lenksäule in eine Unfallposition mittels des Verstellmechanismus und während des Verstellvorgangs oder nach dem Verstellvorgang Auslösen eines Lenkrad-Airbags. Die Position des Lenkrades kann so an die Situation (Hands-on oder Hands-off) angepasst werden, wodurch die Verletzungsgefahr des Fahrers reduziert werden kann. Der Verstellmechanismus verstellt die Lenksäule dabei insbesondere in der Länge.

Vorzugsweise wird in dem Fall, dass nach Detektion eines Unfalls eine Hands-on-Situation erkannt wurde, der Lenkrad-Airbag in der aktuellen Position der Lenksäule ausgelöst. Ein Verstellen der Lenksäule ist hierbei nicht vorgesehen.

In einer bevorzugten Ausführungsform umfasst die Unfallposition die eingefahrene Stellung der Lenksäule.

Vorzugsweise handelt es sich bei dem detektierten Unfall um einen Fahrzeugfrontalaufprall.

Es kann weiterhin vorgesehen sein, dass für den Fall, dass ein Unfall detektiert wurde und eine Hands-off-Situation erkannt wurde, das Lenkrad in eine vorteilhafte Rotationsstellung mittels des Feedback-Aktuators gedreht wird. Dabei ist es bevorzugt, wenn die vorteilhafte Rotationsstellung die neutrale Stellung des Lenkrades ist.

Vorteilhafterweise umfasst das Verfahren den Schritt, dass bei Aufprall des Fahrers auf das Lenkrad, die in das Lenkrad eingetragene Energie mittels einer Energieabsorptionseinrichtung absorbiert wird.

Vorzugsweise weist der Verstellmechanismus einen Elektromotor mit einem Gewindestangenantrieb auf, der ein inneres Mantelrohr der Lenksäule gegenüber einem äußeren Mantelrohr der Lenksäule verschiebt.

Weiterhin ist ein Steer-by-Wire-Lenksystem für ein Kraftfahrzeug vorgesehen, umfassend einen auf gelenkten Räder wirkenden elektronisch regelbaren Lenksteller, einen Feedback-Aktuator, der über ein Lenkrad von einem Fahrer mit einem Fahrerwunsch für einen Lenkwinkel beaufschlagt werden kann und ein Feedback-Signal an das Lenkrad als Reaktion auf den Fahrerwunsch und einen Fahrzustand des Kraftfahrzeugs ausgibt, und eine verstellbare Lenksäule, die mittels eines Verstellmechanismus zwischen einer eingefahrenen Stellung und einer ausgefahrenen Stellung verstellbar ist. Das Steer-by-Wire-Lenksystem ist dabei dazu eingerichtet, das zuvor beschriebene Verfahren auszuführen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: eine schematische Darstellung einer verstellbaren Lenksäule eines Steer-by-Wire-Lenksystems in einer Hands-on-Situation vor einem Unfall,
- Fig. 3:: eine schematische Darstellung einer verstellbaren Lenksäule eines Steer-by-Wire-Lenksystems in einer Hands-on-Situation während eines Unfalls,
- Fig. 4:: eine schematische Darstellung einer verstellbaren Lenksäule eines Steer-by-Wire-Lenksystems in einer Hands-off-Situation vor einem Unfall,
- Fig. 5:: eine schematische Darstellung einer verstellbaren Lenksäule eines Steer-by-Wire-Lenksystems in einer Hands-off-Situation während eines Unfalls,
- Fig. 6:: eine schematische Darstellung einer verstellbaren Lenksäule eines Steer-by-Wire-Lenksystems in einer Hands-off-Situation während eines Unfalls mit ausgelöstem Airbag, sowie
- Fig. 7:: ein Blockdiagramm einer Steuerung einer Insassenschutzeinrichtung des Steer-by-Wire-Lenksystems der Figur 1.

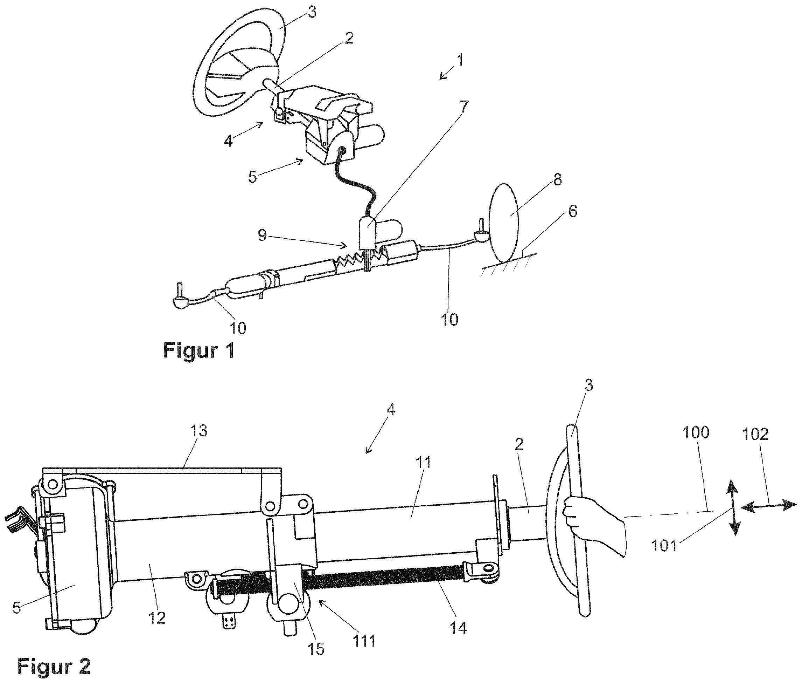

In der Figur 1 ist eine Steer-by-Wire-Lenkung 1 gezeigt. An einer Lenkwelle 2 ist ein nicht dargestellter Drehwinkelsensor angebracht, welcher das durch Drehen des Lenkrads 3 aufgebrachte Fahrerlenkmoment erfasst. Die Lenkwelle 2 ist Teil einer Lenksäule 4, an der ein Feedback-Aktuator 5 angebracht ist, welcher dazu dient, die Rückwirkungen von der Fahrbahn 6 auf das Lenkrad 3 zu übertragen und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 an eine nicht dargestellte Steuereinheit übertragen. Die Steuereinheit steuert in Abhängigkeit von dem Signal des Drehwinkelsensors sowie weiteren Eingangsgrößen, wie z. B. Fahrzeuggeschwindigkeit, Gierrate und dergleichen einen elektrischen Lenksteller 7 an, welcher die Stellung der gelenkten Räder 8 steuert. Der Lenksteller 7 wirkt über ein Zahnstangen-Lenkgetriebe 9 sowie Spurstangen 10 und andere Bauteile mittelbar auf die gelenkten Räder 8. Die Lenksäule 4 ist bevorzugt verstellbar, wobei es vorgesehen sein kann, dass die Lenksäule motorisch verstellbar ist.

Die Figuren 2 bis 6 veranschaulichen eine Lenksäule 4 einer Steer-by-Wire Kraftfahrzeuglenkung, aufweisend die Lenkwelle 2, die um ihre Drehachse drehbar in einem inneren Mantelrohr 11, gelagert ist. Das innere Mantelrohr 11 ist in einem äußeren Mantelrohr 12 entlang der Längsachse 100 der Lenkwelle 2 verschiebbar geführt. Das äußere Mantelrohr 12 ist in einem Halteteil 13 schwenkbar gelagert. Das Halteteil 13 kann an der nicht dargestellten Karosserie befestigt werden. An einem Ende ist die Lenkwelle 2 mit dem Lenkrad 3 verbunden. An dem anderen Ende ist der Feedback-Aktuator 5 angeordnet, der auf die Lenkwelle 2 einwirkt. Zur Erhöhung des Komforts des Fahrers kann die Lenksäule 4 in ihrer Höhe in die Verstellrichtung 101 und in ihrer Länge in die Verstellrichtung 102 verstellt werden. Dazu weist die Lenksäule 4 zwei Verstellantriebe auf. Die Verstellantriebe weisen jeweils einen nicht dargestellten Elektromotor mit einem Gewindestangenantrieb auf, welcher eine auf dem Abtrieb des Elektromotors angeordnete Schneckenwelle sowie eine Spindelmutter umfasst, die an ihrer Außenseite als Schneckenrad ausgebildet ist, und in dessen Verzahnung die auf der Abtriebswelle des Elektromotors angeordnete Schneckenwelle eingreift. Durch Rotation der ortsfesten Spindelmutter wird die Gewindestange axial bewegt. Die Figuren zeigen in einer Seitenansicht den zur Verstellung in der Länge vorgesehenen Verstellantrieb 111 mit Gewindestange 14 und Spindelmutter 15. Die Gewindestange 14 ist an dem inneren Mantelrohr 11 befestigt und die Spindelmutter 15 ist an dem äußeren Mantelrohr 12 gehalten. Die Längssäule 5 kann durch den Verstellantrieb 111 zwischen einer eingefahrenen Stellung und einer ausgefahrenen Stellung bewegt werden. In der eingefahrenen Stellung ist das Lenkrad 3 auf den Feedback-Aktuator 5 zubewegt und befindet sich in einer verstauten Position. Das innere Mantelrohr 11 ist in diesem Fall zu einem großen Teil in dem äußeren Mantelrohr 12 aufgenommen.

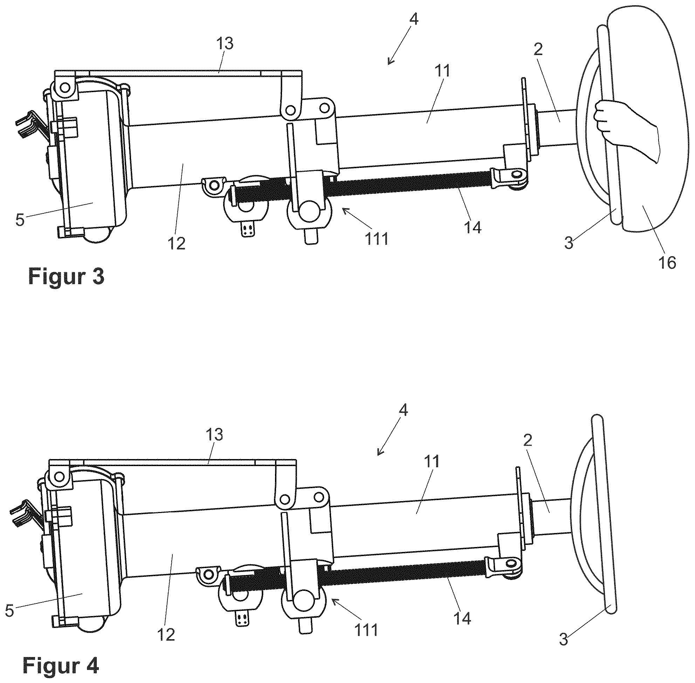

Die Figur 2 zeigt eine Hands-on-Situation. Der Fahrer greift das Lenkrad 2. Wird in einer solchen Hands-on-Situation ein Unfall, insbesondere ein Fahrzeugfrontalaufprall erkannt, wird ein Lenkrad-Airbag 16 ohne Verfahren der Verstellantriebe 111 ausgelöst (siehe Figur 3). In diesem manuellen Fahrmodus ist sichergestellt, dass das Lenkrad 2 einen optimalen Abstand zum Fahrer aufweist und der Airbag 16 für den Aufprall des Fahrers auf das Lenkrad 3 entsprechend ausgebildet ist.

Figur 4 zeigt eine Hands-off-Situation. Der Fahrer greift das Lenkrad 3 nicht. Das Kraftfahrzeug befindet sich in einem autonomen oder semi-autonomen Fahrmodus. Liegt eine solche Hands-off-Situation vor, wird nach Detektion eines Unfalls, insbesondere eines Fahrzeugfrontalaufpralls, zunächst die Verstellung des Lenkrads 3 in eine Unfall-Position vorgenommen. Unter Unfall-Position ist die Position zu verstehen, in der der Fahrer optimal auf das Lenkrad 3 auftrifft und somit die Verletzungsgefahr besonders gering ist. Bevorzugt können zur Bestimmung der Unfall-Position Eigenschaften des Fahrers wie Masse, Sitzposition, Größe etc. dienen. Diese Eigenschaften können mittels Detektionseinrichtungen des Kraftfahrzeugs ermittelt werden.

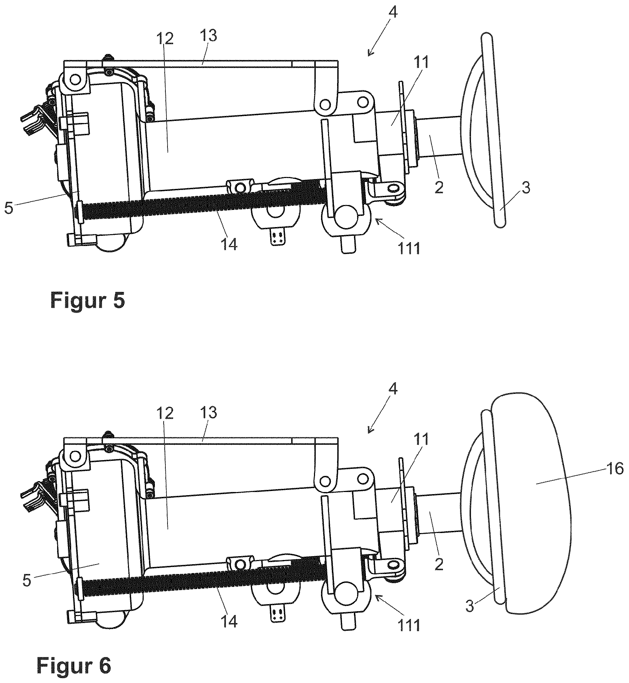

In Figur 5 ist dargestellt, dass das Lenkrad 3 mittels des Verstellmechanismus 111 in Längsrichtung in eine verstaute Position verfahren wurde. Zusätzlich kann es vorgesehen sein, dass das Lenkrad in der Höhe in Verstellrichtung 101 vollständig nach oben verstellt ist. Somit bietet die verstaute Position dem Fahrer mehr Komfort während des autonomen Betriebs des Fahrzeug oder die Möglichkeit komfortabler ins Fahrzeug ein- oder auszusteigen. Die Lenksäule 4 befindet sich in der eingefahrenen Stellung. Diese eingefahrene Stellung der Lenksäule 4 kann der Unfall-Position entsprechen.

Es kann vorgesehen sein, dass im Falle eines Unfalls und einer Hands-off-Situation das Lenkrad zusätzlich in eine vorteilhafte Rotationsstellung gebracht wird. Dazu kann der Feedback-Aktuator 5 der Lenksäule 4 verwendet werden. Bevorzugt wird im Falle eines Unfalls in einer Hands-off-Situation das Lenkrad 2 in die Geradeausstellung überführt. In dieser neutralen Stellung des Lenkrades, stehen die gelenkten Räder, wenn sie mit dem Lenkrad mechanisch gekoppelt wären, in einem Geradeauslauf.

Wie in Figur 6 gezeigt, erfolgt nach dem Verstellvorgang der Lenksäule 4 oder während des Verstellens die Auslösung des Airbags 16.

Bevorzugt weist die Lenksäule 4 eine Energieabsorptionseinrichtung auf, die im Fall eines Fahrzeugfrontalaufpralls die durch den Fahrer in das Lenkrad eigetragene Energie kontrolliert absorbiert.

Die Verstellung der Lenksäule 4 in die Unfall-Position kann mittels einer magnetischen, pneumatischen, hydraulischen, elektro-mechanischen oder pyrotechnischen Einrichtung erfolgen und ist nicht auf den in den Figuren dargestellten Verstellmechanismus beschränkt.

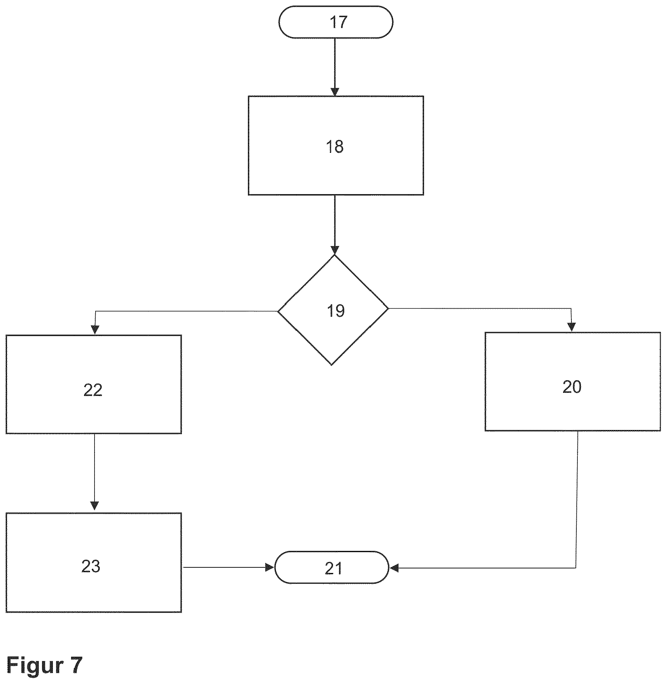

In der Figur 7 ist ein Blockdiagramm des Verfahrens zum Betreiben einer Insassenschutzeinrichtung dargestellt. Nach einem Start des Verfahrens 17 wird in einem ersten Schritt 18 ein Unfall, insbesondere ein Frontalaufprall, detektiert. Darauf folgt eine Abfrage 19 ob eine Handberührung des Fahrers an dem Lenkrad 2 vorliegt oder nicht. Liegt eine Hands-on-Situation vor, wird in einem nächsten Schritt 20 der Airbag ausgelöst und das Verfahren beendet 21. Wird hingegen ein Hands-off Zustand detektiert, wird das Lenkrad in eine Unfall-Position verfahren 22, der Airbag ausgelöst 23 und das Verfahren beendet 21.

## Patentansprüche

1. Verfahren zum Betreiben einer Insassenschutzeinrichtung eines Steer-by-Wire Lenksystems (1), wobei das Steer-by-Wire Lenksystem (1) ein Lenkrad (3) und eine mit dem Lenkrad (3) verbundene verstellbare Lenksäule (4) umfasst, die mittels eines Verstellmechanismus (111) zwischen einer eingefahrenen Stellung und einer ausgefahrenen Stellung verstellbar ist, und wobei das Steer-by-Wire Lenksystem (1) einen Feedback-Aktuator (5) aufweist, der über das Lenkrad (3) von einem Fahrer mit einem Fahrerwunsch für einen Lenkwinkel beaufschlagt werden kann und ein Feedback-Signal an das Lenkrad (3) als Reaktion auf den Fahrerwunsch und einen Fahrzustand des Kraftfahrzeugs ausgibt, **dadurch gekennzeichnet, dass** das Verfahren folgende Schritte umfasst:
• Detektieren eines Unfalls (18),
• Detektieren einer Hands-off-Situation oder einer Hands-on-Situation (19),
• Falls eine Hands-off-Situation erkannt wurde, Verfahren der Lenksäule in eine Unfallposition (22) mittels des Verstellmechanismus (111) und während des Verstellvorgangs oder danach Auslösen eines Lenkrad-Airbags (23).

2. Verfahren nach Anspruch 1, **dadurch gekennzeichnet, dass** das Verfahren folgenden Schritt umfasst:
• Falls nach Detektion eines Unfalls (18) eine Hands-on-Situation erkannt wurde, Auslösen des Lenkrad-Airbags (20) in der aktuellen Position der Lenksäule.

3. Verfahren nach Anspruch 1 oder 2, **dadurch gekennzeichnet, dass** die Unfallposition die eingefahrene Stellung der Lenksäule (4) umfasst.

4. Verfahren nach einem der vorhergehenden Ansprüche, **dadurch gekennzeichnet, dass** der detektierte Unfall ein Fahrzeugfrontalaufprall ist.

5. Verfahren nach einem der vorhergehenden Ansprüche, **dadurch gekennzeichnet, dass** das Verfahren folgenden weiteren Schritt für den Fall, dass ein Unfall detektiert wurde (18) und eine Hands-off-Situation erkannt wurde, umfasst:
• Rotation des Lenkrades (3) in eine vorteilhafte Rotationsstellung mittels des Feedback-Aktuators (5).

6. Verfahren nach Anspruch 5, **dadurch gekennzeichnet, dass** die vorteilhafte Rotationsstellung die neutrale Stellung des Lenkrades (3) ist.

7. Verfahren nach einem der vorhergehenden Ansprüche, **dadurch gekennzeichnet, dass** das Verfahren folgenden Schritt umfasst:
• Bei Aufprall des Fahrers auf das Lenkrad (3), Absorption der in das Lenkrad (3) eingetragenen Energie mittels einer Energieabsorptionseinrichtung.

8. Verfahren nach einem der vorhergehenden Ansprüche, **dadurch gekennzeichnet, dass** der Verstellmechanismus (111) einen Elektromotor mit einem Gewindestangenantrieb (14) aufweist, der ein inneres Mantelrohr (11) der Lenksäule (4) gegenüber einem äußeren Mantelrohr (12) der Lenksäule (4) verschiebt.

9. Steer-by-Wire-Lenksystem (1) für ein Kraftfahrzeug umfassend:
• einen auf gelenkten Räder (8) wirkenden elektronisch regelbaren Lenksteller (7),
• einen Feedback-Aktuator (5), der über ein Lenkrad (3) von einem Fahrer mit einem Fahrerwunsch für einen Lenkwinkel beaufschlagt werden kann und ein Feedback-Signal an das Lenkrad (3) als Reaktion auf den Fahrerwunsch und einen Fahrzustand des Kraftfahrzeugs ausgibt, und
• eine verstellbare Lenksäule (4), die mittels eines Verstellmechanismus (111) zwischen einer eingefahrenen Stellung und einer ausgefahrenen Stellung verstellbar ist, **dadurch gekennzeichnet, dass** das Steer-by-Wire-Lenksystem (1) dazu eingerichtet ist, ein Verfahren nach einem der Ansprüche 1 bis 8 auszuführen.

## Claims

1. A method for operating a vehicle occupant protection device of a steer-by-wire steering system (1), wherein the steer-by-wire steering system (1) comprises a steering wheel (3) and an adjustable steering column (4) which is connected to the steering wheel (3) and can be adjusted between a retracted position and a deployed position by means of an adjustment mechanism (111), and wherein the steer-by-wire steering system (1) has a feedback actuator (5) to which a driver's request for a steering angle can be applied by a driver via the steering wheel (3), and which outputs a feedback signal to the steering wheel (3) in response to the driver's request and a driving state of the motor vehicle, **characterized in that** the method comprises the following steps:
• detecting an accident (18),
• detecting a hands-off situation or a hands-on situation (19),
• if a hands-off situation has been detected, moving the steering column into an accident position (22) by means of the adjustment mechanism (111) and triggering a steering wheel airbag (23) during the adjustment process or afterwards.

2. The method as claimed in claim 1, **characterized in that** the method comprises the following step:
• if a hands-on situation has been detected after detection of an accident (18), triggering the steering wheel airbag (20) in the current position of the steering column.

3. The method as claimed in claim 1 or 2, **characterized in that** the accident position comprises the retracted position of the steering column (4).

4. The method as claimed in one of the preceding claims, **characterized in that** the detected accident is a vehicle head-on impact.

5. The method as claimed in one of the preceding claims, **characterized in that** the method comprises the following further step for the case in which an accident has been detected (18) and a hands-off situation has been detected:
• rotation of the steering wheel (3) into an advantageous rotational position by means of the feedback actuator (5).

6. The method as claimed in claim 5, **characterized in that** the advantageous rotational position is the neutral position of the steering wheel (3).

7. The method as claimed in one of the preceding claims, **characterized in that** the method comprises the following step:
• when the driver impacts against the steering wheel (3), absorption of the energy input into the steering wheel (3), by means of an energy absorption device.

8. The method as claimed in one of the preceding claims, **characterized in that** the adjustment mechanism (111) has an electric motor with a threaded rod drive (14) which shifts an inner steering column tube (11) of the steering column (4) with respect to an outer steering column tube (12) of the steering column (4).

9. A steer-by-wire steering system (1) for a motor vehicle comprising:
• an electronically controllable steering actuator (7) which acts on steered wheels (8),
• a feedback actuator (5) to which a driver's request for a steering angle can be applied by a driver via a steering wheel (3) and which outputs a feedback signal to the steering wheel (3) in response to the driver's request and a driving state of the motor vehicle, and
• an adjustable steering column (4) which can be adjusted between a retracted position and a deployed position by means of an adjustment mechanism (111),
**characterized in that** the steer-by-wire steering system (1) is configured to carry out a method as claimed in one of claims 1 to 8.

## Revendications

1. Procédé de fonctionnement d'un dispositif de protection d'occupants d'un système de direction à commande électrique (1), le système de direction à commande électrique (1) comprenant un volant (3) et une colonne de direction réglable (4) qui est reliée au volant (3) et qui peut être réglée entre une position rétractée et une position déployée au moyen d'un mécanisme de réglage (111), et le système de direction à commande électrique (1) comportant un actionneur à rétroaction (5) qui peut être actionné, par le biais du volant (3), par un conducteur ayant un souhait en termes d'angle de direction et qui délivre un signal de rétroaction au volant (3) en réaction au souhait du conducteur et à un état de conduite du véhicule automobile,
**caractérisé en ce que** le procédé comprend les étapes suivantes :
• détecter un accident (18),
• détecter une situation de mains libres ou une situation de mains au volant (19),
• si une situation de mains libres est détectée, amener la colonne de direction dans une position d'accident (22) à l'aide du mécanisme de réglage (111) et déclencher un airbag de volant (23) pendant le processus de réglage ou après.

2. Procédé selon la revendication 1, **caractérisé en ce que** le procédé comprend l'étape suivante :
• si une situation de mains au volant est détectée après la détection d'un accident (18), déclencher l'airbag de volant (20) dans la position actuelle de la colonne de direction.

3. Procédé selon la revendication 1 ou 2, **caractérisé en ce que** la position d'accident comprend la position rétractée de la colonne de direction (4).

4. Procédé selon l'une des revendications précédentes, **caractérisé en ce que** l'accident détecté est un choc frontal de véhicule.

5. Procédé selon l'une des revendications précédentes, **caractérisé en ce que** le procédé comprend l'étape supplémentaire suivante dans le cas où un accident a été détecté (18) et qu'une situation de mains libres a été révélée :
• faire tourner le volant (3) dans une position de rotation avantageuse au moyen de l'actionneur à rétroaction (5).

6. Procédé selon la revendication 5, **caractérisé en ce que** la position de rotation avantageuse est la position neutre du volant (3).

7. Procédé selon l'une des revendications précédentes, **caractérisé en ce que** le procédé comprend l'étape suivante :
• si le conducteur heurte le volant (3), absorber l'énergie injectée dans le volant (3) au moyen d'un dispositif d'absorption d'énergie.

8. Procédé selon l'une des revendications précédentes, **caractérisé en ce que** le mécanisme de réglage (111) comporte un moteur électrique à entraînement par tige filetée (14) qui déplace un tube d'enveloppe intérieur (11) de la colonne de direction (4) par rapport à un tube d'enveloppe extérieur (12) de la colonne de direction (4).

9. Système de direction à commande électrique (1) destiné à un véhicule automobile, ledit système comprenant :
• un régleur de direction à réglage électronique (7) qui agit sur les roues dirigées (8),
• un actionneur à rétroaction (5) qui peut être actionné, par le biais d'un volant (3), par un conducteur ayant un souhait en termes d'angle de direction et qui délivre un signal de rétroaction au volant (3) en réaction au souhait du conducteur et à un état de conduite du véhicule automobile, et
• une colonne de direction réglable (4) qui peut être réglée entre une position rétractée et une position déployée au moyen d'un mécanisme de réglage (111), **caractérisé en ce que** le système de direction à commande électrique (1) est conçu pour mettre en œuvre un procédé selon l'une des revendications 1 à 8.
